# EUROPÄISCHE PATENTANMELDUNG

(11) **EP 2 149 716 A2**
(43) Veröffentlichungstag der Anmeldung: **03.02.2010**
(21) Anmeldenummer: 09165117.4
(22) Anmeldetag: 10.07.2009
(51) Int. Cl.: F16B 7/18, F16B 37/14

(54) **Vorrichtung zum Anschluss einer Gewindestange an Stahlteile**

(30) Priorität: 28.07.2008 DE 202008010092 U
(71) Anmelder: SFS intec Holding AG, 9435 Heerbrugg (CH)
(72) Erfinder: Sahli, Richard, 9443, Widnau (CH); Göttlein, Caroline, 9451, Kriessern (CH)

(57) **Zusammenfassung**

Beschrieben ist eine Vorrichtung zum Anschluss einer Gewindestange (12) mit Holzschraubengewinde an Stahlteile wie Ösen (14) od. dgl. Die Vorrichtung umfasst einen bolzenförmigen Adapter (20) mit an einem Ende (22) angeordneter Gewindebohrung (24) mit Holzschraubengewinde (26) zum Einschrauben der Gewindestange (12). Die Gewindebohrung (24) ist als ein Sackloch ausgebildet. An dem anderen Ende (32) ist an dem Adapter (20) an einem Zapfen (30) desselben ein Maschinenschraubengewinde (34) zum Anschluss von Stahlteilen ausgebildet. Das Maschinenschraubengewinde (34) könnte stattdessen in einer an dem anderen Ende (32) des Adapters (20) vorgesehenen weiteren Gewindebohrung ausgebildet sein. In diesem Falle würde die Gewindebohrung (24) nicht als ein Sackloch ausgebildet sein, sondern am Ende in ein engeres Durchgangsloch übergehen, so dass auch in diesem Fall ein Anschlag für die in die Gewindebohrung (24) eingeschraubte Gewindestange (12) vorhanden wäre.

## Beschreibung

Die Erfindung betrifft eine Vorrichtung zum Anschluss einer Gewindestange mit Holzschraubengewinde an Stahlteile wie Ösen od. dgl.

Bei einem bekannten Befestigungssystem der Anmelderin, das in dem Prospekt "Querzugverstärkungen einfach gelöst: Befestigungssystem WB für wirtschaftliche und sichere Verstärkungen im Holzleimbau", 900614 D, SFS intec 2007, beschrieben ist, lassen sich mit einer Eindrehhülse Gewindestangen mit einer Bohrmaschine mit hohem Drehmoment in mit bis zu 3 Meter Tiefe in einer Holzkonstruktion vorgebohrte Löcher eindrehen, um die Holzkonstruktion zu verstärken. Das Vorbohren erfolgt mit einer Ständerbohrmaschine und mit Bohrverlängerungen oder mit einem Tiefbohrsystem. Die Gewindestangen werden zuvor auf die benötigte Länge genau zugeschnitten. Die Länge wird vorzugsweise so gewählt, dass die Gewindestangen nachträglich nicht aus dem Holz hervorstehen. Mit der Eindrehhülse werden die Gewindestangen beim Eindrehen direkt versenkt. Anschließend wird die Eindrehhülse mit einer Knarre gelöst und das Loch wird mit einem Querholzplättchen abgedeckt. Die bei diesem System eingesetzten Gewindestangen haben einen Durchmesser von 16 oder 20 mm. Das Holzschraubengewinde der Eindrehhülse hat vorzugsweise eine Gewindegeometrie nach DIN 7998. Auf der zu der Gewindebohrung entgegengesetzten oder anderen Seite hat die Eindrehhülse als Drehkraftangriff eine Bohrung mit einem Innensechskant oder -vierkant.

Das Dokument DE 10 2006 047 673 A1 betrifft ein Einschraubwerkzeug, das die Funktion der oben genannten Eindrehhülse erfüllt, denn es dient zum Einschrauben von Befestigungselementen wie Gewindestangen mit Holzschraubengewinde. Um die beim Einschrauben eines Befestigungselements entstehende Verspannung zwischen Werkzeug und Befestigungselement nach dem Setzen des Befestigungselements wieder lösen zu können, erfolgt die Verbindung zwischen dem Befestigungselement und dem Werkzeug derart, dass sich nach dem Setzen die Spannung zwischen dem Werkzeug und dem Befestigungselement leicht aufhebt. Zu diesem Zweck besteht das Werkzeug aus zwei miteinander verschraubten Teilen. Der obere, also der von dem Befestigungselement abgewandte Teil des Werkzeuges hat eine Schlüsselfläche. Beim Setzen des Befestigungselements ist der obere Teil mit einem Ansatz mit dem unteren Teil in Gewindeeingriff. Der dem Befestigungselement zugewandte untere Teil des Werkzeuges enthält eine Durchgangsbohrung mit einem Innengewinde, das dem Außengewinde des Befestigungselementes entspricht. Die Festlegung zwischen dem Werkzeug und dem Befestigungselement geschieht dadurch, dass das freie Ende des Befestigungselements an einer unteren Stirnfläche des Ansatzes zur Anlage gelangt. Nach dem Setzen des Befestigungselements wird das Werkzeug komplett wieder entfernt, indem die beiden Teile des Werkzeuges gegeneinander verdreht und dadurch von einander und von dem Befestigungselement gelöst werden. Dieses bekannte Werkzeug dient also wie die oben genannte Eindrehhülse lediglich zum Einschrauben eines Befestigungselements wie einer Gewindestange mit Holzschraubengewinde in eine Holzkonstruktion.

Im konstruktiven Holzbau ist es häufig erforderlich, Anschlüsse von Holz an Stahlteile herzustellen, wenn ein Wechsel zwischen den beiden Baustoffen auftritt. Solche Anschlüsse sind üblicherweise entweder senkrecht oder schräg zur Holzfaser oder parallel zur Holzfaser erforderlich. In dem einen Fall handelt es sich beispielsweise um Windverbände oder angehängte Lasten wie Gebäudetechnik in Hallen. In dem anderen Fall handelt es sich beispielsweise um einen Sockelanschluss von Brettschichtholzsäulen, um biegesteife Rahmenecken oder um räumliche Fachwerke. Solche Stahl-Holz-Verbindungen lassen sich mit Stabdübeln, mit eingeklebten Stahlteilen oder mit Teilgewindeschrauben, mit denen vorgebohrte Stahlteile im Holz befestigt werden, herstellen.

Da große Kräfte zwischen Holz und Gewindestange übertragen werden können, wird bereits danach getrachtet, Kräfte zwischen der Gewindestange und zusätzlichen Stahlteilen direkt zu übertragen. So beschreibt die EP 1 923 582 A2 eine Befestigungsanordnung, bei der eine Gewindestange mit Holzgewinde eine Mutter umfasst, die eine Innenöffnung mit einem dem Holzgewinde der Gewindestange entsprechenden Gegengewinde aufweist. Diese bekannte Befestigungsanordnung soll ein auswechselbares Befestigen von zusätzlichen Elementen bei Holzkonstruktionen ermöglichen. Die Gewindestange wird soweit eingeschraubt, dass ein Teil von ihr aus der Oberfläche der Holzkonstruktion herausragt. Dort kann ein weiterer Gegenstand, der ein Loch aufweist, auf den herausragenden Teil der Gewindestange aufgeschoben und mit Hilfe der Mutter gesichert werden. Dabei wird auch in Betracht gezogen, eine Gewindestange so anzuordnen, dass sie auf beiden Seiten der Holzkonstruktion aus der jeweiligen Oberfläche herausragt, so dass an beiden Enden ein Gegenstand befestigt werden kann. Die bekannte Befestigungsanordnung ist aufwändig, weil zum Einschrauben der Gewindestange in die Holzkonstruktion zusätzlich ein Spezialwerkzeug benötigt wird wie zum Beispiel die oben beschriebene Eindrehhülse oder das oben beschriebene zweiteilige Einschraubwerkzeug.

Aufgabe der Erfindung ist es, eine Vorrichtung der eingangs genannten Art so auszubilden, dass sich Stahlteile an eine Gewindestange mit Holzschraubengewinde leichter und wirtschaftlicher anschließen lassen.

Diese Aufgabe ist erfindungsgemäß mit einer Vorrichtung der eingangs genannten Art gelöst, die durch einen bolzenförmigen Adapter mit an einem Ende angeordneter Gewindebohrung mit Holzschraubengewinde zum Einschrauben der Gewindestange, wobei die Gewindebohrung als ein Sackloch ausgebildet ist oder am Ende in ein engeres Durchgangsloch übergeht, und mit einem an dem anderen Ende ausgebildeten Maschinenschraubengewinde zum Anschluss von Stahlteilen gekennzeichnet ist.

Dadurch, dass die Vorrichtung nach der Erfindung zum Anschluss einer Gewindestange mit Holzschraubengewinde an Stahlteile wie Ösen od. dgl. mit den vorgenannten Merkmalen versehen ist, lässt sie sich nicht nur als ein Anschluss für Stahlteile benutzen, sondern auch als eine Eindrehhülse zum Einschrauben der Gewindestange in eine Holzkonstruktion. Wenn also von vornherein bekannt ist, dass an eine Gewindestange nach dem Eindrehen in die Holzkonstruktion ein Stahlteil angeschlossen werden soll, wird zweckmäßig die erfindungsgemäße Anschlussvorrichtung verwendet, die sowohl als Eindrehhülse für die Gewindestange als auch als Anschluss für Stahlteile geeignet ist. Wenn hingegen von vornherein bekannt ist, dass an eine Gewindestange nach dem Eindrehen kein Stahlteil anzuschließen ist, lässt sich die bei dem eingangs geschilderten Befestigungssystem WB vorgesehene bekannte Gewindehülse zum Eindrehen der Gewindestange verwenden, die nach dem Eindrehen entfernt wird. Wenn sich später ein Bedarf oder die Notwendigkeit ergeben sollte, ein Stahlteil an die Gewindestange anzuschließen, bräuchte lediglich das Querholzplättchen, welches das Ende der Gewindestange in dem Senkloch abdeckt, entfernt zu werden, damit eine Anschlussvorrichtung nach der Erfindung auf das versenkte Ende der Gewindestange aufgeschraubt werden kann. Nach dem Aufschrauben der Anschlussvorrichtung steht deren am anderen Ende ausgebildetes Maschinenschraubengewinde zur Verfügung, um über die Vorrichtung Stahlteile mit der Gewindestange zu verbinden. Die Anschlussvorrichtung nach der Erfindung ist kostengünstig herstellbar, weil sie im Wesentlichen den Aufbau der bekannten Eindrehhülse aufweist, die im einfachsten Fall lediglich zusätzlich mit einem Maschinenschraubengewinde versehen zu werden braucht. Das eingangs beschriebene zweiteilige Werkzeug kann weder in seiner Gesamtheit noch mit seinem unteren Teil allein die Funktion der Eindrehhülse erfüllen und anschließend als Anschluss für Stahlteile dienen. Der untere Teil des bekannten Werkzeuges ist nämlich nur einsatzfähig, wenn der obere Teil des Werkzeuges in ihn eingeschraubt ist, weil dann die Stirnfläche des Ansatzes des oberen Teils als Anschlag für die Gewindestange vorhanden ist. Bei der Anschlussvorrichtung nach der Erfindung ist wie bei der bekannten Eindrehhülse dieser Anschlag von Haus aus vorhanden.

Vorteilhafte Ausgestaltungen der Erfindung bilden die Gegenstände der Unteransprüche.

In einer Ausgestaltung der Anschlussvorrichtung nach der Erfindung weist der Adapter einen Zapfen auf, der außen mit dem Maschinenschraubengewinde versehen ist. Ein mit einem Loch versehenes Stahlteil lässt sich einfach mit der Anschlussvorrichtung verbinden, indem der Zapfen von einer Seite des Stahlteils aus durch das Loch hindurchgeführt wird und indem auf der anderen Seite eine Mutter mit einem entsprechenden Innengewinde auf den Zapfen aufgeschraubt wird. Darüber hinaus lässt sich der Zapfen der Anschlussvorrichtung nach der Erfindung als ein Drehkraftangriff zum Einschrauben der Gewindestange in eine Holzkonstruktion benutzen. Dafür kann beispielsweise ein motorisches Eindrehwerkzeug eingesetzt werden, das ein Bit mit einem dem Maschinenschraubengewinde des Zapfens entsprechenden Innengewinde hat. Alternativ könnten zwei Muttern auf dem Zapfen gekontert werden, so dass ein Elektroschrauber zum Eindrehen der Gewindestange eingesetzt werden kann, dessen Bit einen Innensechskant zur Aufnahme der äußeren Mutter hat. Der außen mit dem Maschinenschraubengewinde versehene Zapfen kann dabei einen Durchmesser haben, der gleich dem Außendurchmesser des bolzenförmigen Adapters an dem einen Ende ist, welches die Gewindebohrung mit Holzschraubengewinde enthält. Zweckmäßig wird der Durchmesser je nachdem kleiner oder größer gewählt, ob die Anschlussvorrichtung am Ende in der Holzkonstruktion versenkt oder auf der Holzkonstruktion angeordnet sein soll.

In einer weiteren Ausgestaltung der Anschlussvorrichtung nach der Erfindung weist der Adapter an dem anderen Ende eine weitere Gewindebohrung auf, die mit dem Maschinenschraubengewinde versehen ist und in die das engere Durchgangsloch, falls vorhanden, mündet. In diesem Fall lässt sich ein Stahlteil, das einen Gewindezapfen mit einem Außengewinde hat, welches dem Innengewinde der Gewindebohrung des Adapters entspricht, einfach in die Gewindebohrung einschrauben, um das Stahlteil mit der Gewindestange zu verbinden. Das Innengewinde der Gewindebohrung kann auch benutzt werden, um die Gewindestange in eine Holzkonstruktion einzudrehen. In diesem Fall bräuchte ein Elektroschrauber lediglich ein Bit zu haben, das mit einem zu der Gewindebohrung passenden Außengewinde versehen ist.

In einer weiteren Ausgestaltung der Anschlussvorrichtung nach der Erfindung ist das Maschinenschraubengewinde ein Metrisches ISO-Gewinde oder ein UST(Unified Screw Thread)-Gewinde, wobei mit letzterem jede Art von Zoll-Gewinde gemeint ist. Das Holzschraubengewinde entspricht vorzugsweise DIN 7998, könnte aber auch irgendein ungenormtes Holzschraubengewinde sein. Wenn ein metrisches Maschinenschraubengewinde eingesetzt wird, lassen sich die außerhalb des angelsächsischen Sprachraums gängigen genormten Stahlteile durch Aufschrauben auf den Zapfen oder durch Einschrauben in die Gewindebohrung des Adapters auf einfache Weise an die Gewindestange mit Holzschraubengewinde anschließen.

In einer weiteren Ausgestaltung der Anschlussvorrichtung nach der Erfindung ist der Adapter an oder benachbart zu seinem anderen Ende mit einem Außendrehkraftangriff versehen. Zum Eindrehen der Gewindestange in eine Holzkonstruktion lässt sich, wenn der Außendrehkraftangriff z.B. ein Sechskant wie be einer Sechskantmutter ist, einfach ein Ringschlüssel oder ein Elektroschrauber mit einem entsprechenden ring- oder rohrschlüsselartigen Bit einsetzen.

In einer weiteren Ausgestaltung der Anschlussvorrichtung nach der Erfindung erstreckt sich eine Öffnung mit polygonalem Querschnitt in der Mittelachse des Adapters zwischen der weiteren Gewindebohrung und der einen Gewindebohrung. Die Öffnung mit polygonalem Querschnitt, die als Sackloch oder Durchgangsloch ausgebildet sein kann, erlaubt, die Anschlussvorrichtung nach der Erfindung so wie die bekannte Eindrehhülse bei dem Einschrauben einer Gewindestange mit Holzschraubengewinde in eine Holzkonstruktion zu handhaben.

Ausführungsbeispiele der Erfindung werden im Folgenden unter Bezugnahme auf die Zeichnungen näher beschrieben. Es zeigt
- Fig. 1: in einer Längsschnittansicht den Anschluss einer Stahlöse an eine in einer Holzkonstruktion versenkte Gewindestange mit Hil- fe einer Anschlussvorrichtung nach der Erfindung,
- Fig. 2: in einer Seitenansicht das in Fig. 1 gezeigte Ausführungsbeispiel nach der Erfindung, wobei die Holzkonstruktion der Übersicht- lichkeit halber weggelassen worden ist und wobei zusätzlich ein Sechskant-Außendrehkraftangriff an einem bolzenförmigen A- dapter der Anschlussvorrichtung nach der Erfindung zu erken- nen ist,
- Fig. 3: in einer Längsschnittansicht den Anschluss einer Stahlplatte an eine in einer Holzkonstruktion versenkte Gewindestange mit Hil- fe einer Anschlussvorrichtung nach der Erfindung und einer auf den Adapter mit Maschinenschraubengewinde aufgeschraubten Mutter mit einem entsprechenden Innengewinde und
- Fig. 4: in einer Längsschnittansicht ein weiteres Ausführungsbeispiel der Anschlussvorrichtung nach der Erfindung, bei der der bol- zenförmige Adapter zusätzlich zu der Bohrung mit Holz- schraubengewinde eine Bohrung mit Maschinenschraubenge- winde aufweist.

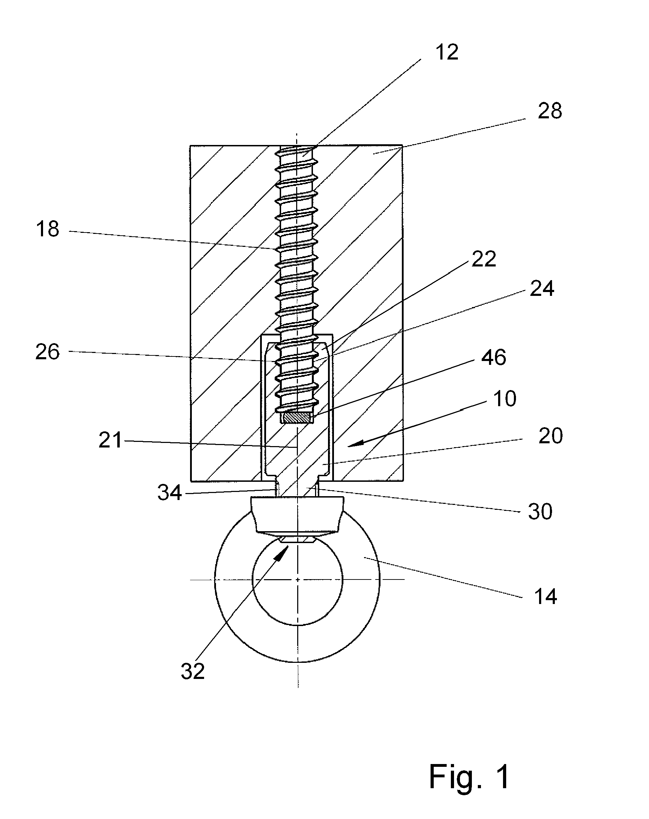

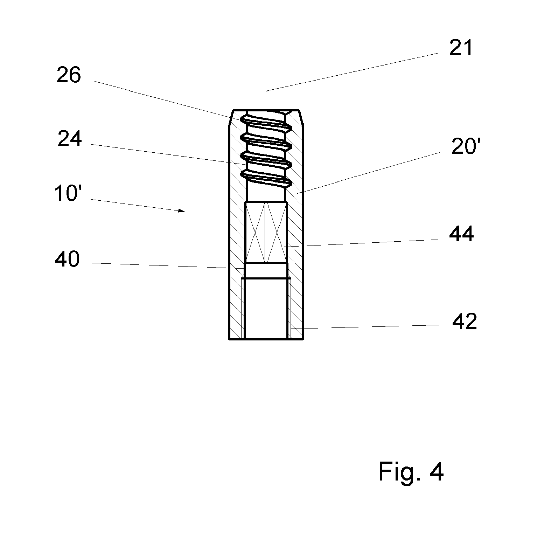

In einem in den Fig. 1 - 3 gezeigten ersten Ausführungsbeispiel ist eine erfindungsgemäße Anschlussvorrichtung insgesamt mit 10 bezeichnet. In einem in Fig. 4 dargestellten zweiten Ausführungsbeispiel der Anschlussvorrichtung ist diese insgesamt mit 10' bezeichnet. Unter Bezugnahme auf die Fig. 1 - 3 wird die Anschlussvorrichtung 10 im Folgenden näher beschrieben.

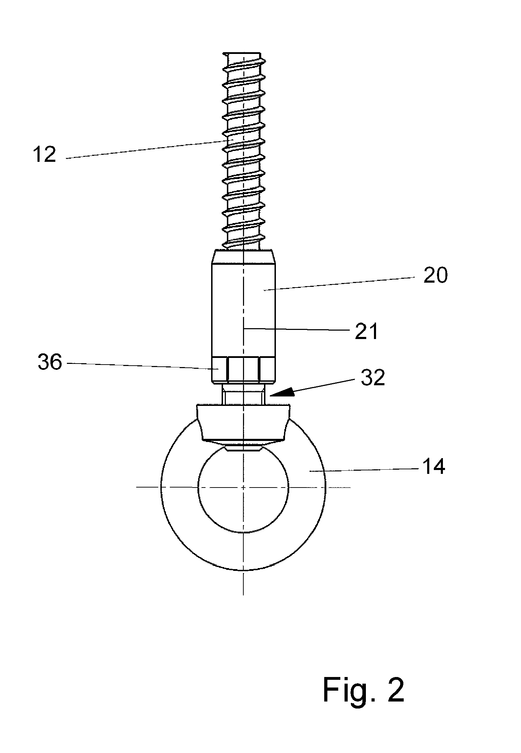

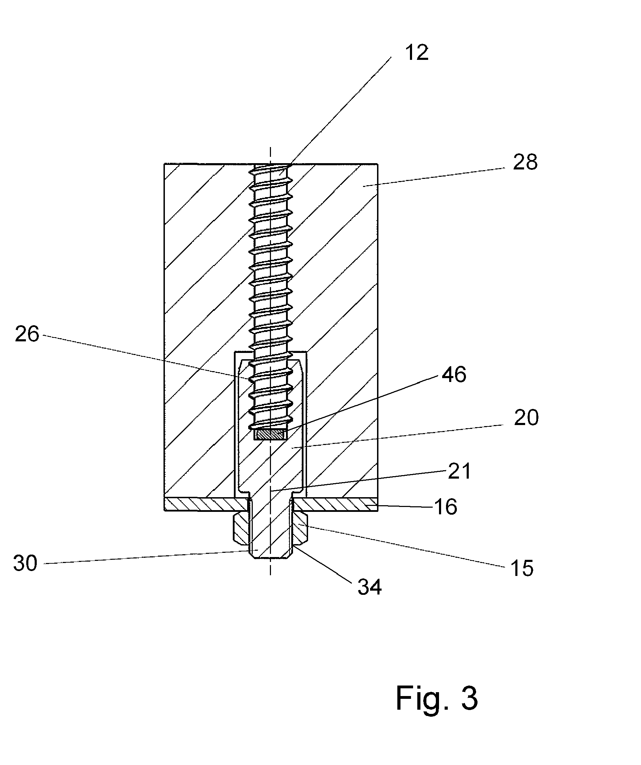

Die Vorrichtung 10 dient (wie die Vorrichtung 10') zum Anschluss einer Gewindestange 12 mit Holzschraubengewinde (zum Beispiel nach DIN 7998) an genormte Stahlteile wie eine in den Fig. 1 und 2 gezeigte Öse 14 oder an andere Bauteile wie eine in Fig. 3 gezeigte Stahlplatte 16. Die Anschlussvorrichtung 10 ist als ein bolzenförmiger Adapter 20 ausgebildet. Der Adapter 20 hat an einem Ende (in den Fig. 1 - 3 seinem oberen Ende) 22 eine Gewindebohrung 24 mit einem Holzschraubengewinde 26 als Innengewinde. Die Gewindestange 12 hat außen ein Holzschraubengewinde 18. Das Außenholzschraubengewinde 18 und das Innenholzschraubengewinde 26 sind komplementär zueinander ausgebildet. Die Gewindestange 12 stützt sich über ein Anschlagelement 46 am Grund der Gewindebohrung 24 ab. Die Gewindestange 12 dient zum Verstärken einer Holzkonstruktion 28. Fig. 1 zeigt in einer Längsschnittansicht den Anschluss der Stahlöse 14 an die in der Holzkonstruktion 28 versenkte Gewindestange 12 mit Hilfe der Anschlussvorrichtung 10. Für die Verbindung des Adapters 20 mit der Stahlöse 14 weist der Adapter an seinem anderen Ende 32, das zu dem Ende 22 entgegengesetzt ist, einen Zapfen 30 auf, der außen mit einem Maschinenschraubengewinde (einem Spitzgewinde) 34 versehen ist. Die Stahlöse 14 hat eine Bohrung mit einem entsprechenden Maschinenschraubengewinde und kann daher einfach auf den Zapfen 30 aufgeschraubt werden.

Jedes Maschinenschraubengewinde ist bei den hier beschriebenen Ausführungsbeispielen ein Metrisches ISO-Gewinde, könnte aber auch ein Zollgewinde sein, wie eingangs erläutert.

Fig. 2 ist eine Seitenansicht des in Fig. 1 gezeigten Ausführungsbeispiels, wobei die Holzkonstruktion 28 der Übersichtlichkeit halber weggelassen worden ist und wobei zusätzlich ein Sechskant-Außendrehkraftangriff 36 an dem zu dem Zapfen 30 benachbarten Ende des Adapters 20 zu erkennen ist.

Fig. 3 zeigt in einer Längsschnittansicht den Anschluss der Stahlplatte 16 an die in der Holzkonstruktion 28 versenkte Gewindestange 12 mit Hilfe der Anschlussvorrichtung 10. Auf den Adapter 20, der das Maschinenschraubengewinde 34 aufweist, ist eine Mutter 15 mit einem entsprechenden Innengewinde aufgeschraubt.

Fig. 4 zeigt in einer Längsschnittansicht die Anschlussvorrichtung 10' gemäß dem weiteren Ausführungsbeispiel der Erfindung, bei der der bolzenförmige Adapter 20 zusätzlich zu der Gewindebohrung 24 mit dem Holzschraubengewinde 26 eine Bohrung 40 mit einem Maschinenschraubengewinde 42 aufweist, das vorzugsweise zu dem Maschinenschraubengewinde 34 komplementär ist. In einer Mittelachse 21 des Adapters 20 erstreckt sich zwischen der Gewindebohrung 40 und der Gewindebohrung 24 eine Öffnung 44 mit polygonalem Querschnitt, der in dem Ausführungsbeispiel nach Fig. 4 viereckig ist. Die Vierkant-Öffnung 44 ist in der Längsschnittansicht in Fig. 4 gezeigt. Die Öffnung 44, die ein sich von der Bohrung 40 aus zu der Bohrung 24 hin erstreckendes Sackloch sein kann oder, wie dargestellt, ein Durchgangsloch, bildet einen Innendrehkraftangriff, in den ein Werkzeug mit entsprechendem polygonalen Querschnitt durch die Gewindebohrung 40 hindurch eingeführt werden kann, um die in Fig. 4 nicht dargestellte Gewindestange 12 mit Holzschraubengewinde in ein vorgebohrtes Loch in der ebenfalls nicht dargestellten Holzkonstruktion 28 einzudrehen. Nachdem das Eindrehen erfolgt ist, kann in die Gewindebohrung 40 ein Stahlteil (nicht dargestellt) eingeschraubt werden, das ein dem Maschinenschraubengewinde 42 entsprechendes Außengewinde hat. Grundsätzlich kann in die Gewindebohrung 40 jede Schraube mit einem Maschinenschraubengewinde eingeschraubt werden, das zu dem Maschinenschraubengewinde 42 komplementär ist. Mit den Normteilen, die in die Gewindebohrung 40 eingeschraubt werden, können Stahlteile an der Holzkonstruktion 28 befestigt werden, zum Beispiel Stahlseile, Stahlösen, Stahlhaken und dgl. In jedem Fall erfolgt so die Übertragung von Axialkräften von der Gewindestange 12 mit Holzschraubengewinde, die in die Holzkonstruktion 28 eingeschraubt ist, auf ein metrisches Gewinde, an welchem beliebige (Stahl-)Teile wie die Stahlöse 14 od. dgl. befestigt werden können. An die Stahlöse 14 kann ein Stahlseil angeschlossen werden. Denkbar sind außer Ösen wie der Stahlöse 14 zum Anschluss von Stahlseilen ein metrisches Innengewinde zum Einschrauben von Schrauben, mit denen weitere Teile befestigt werden können, oder eine Art Kopf, um vorgebohrte (Stahl-)Teile mittels Klemmwirkung zu befestigen, oder für die Querdruckverstärkung. Die Stahlplatte 16 (Fig. 3) kann als Auflagerverstärkung dienen. In jedem Fall erlaubt das die Übertragung einer maximalen Kraft (Zugbruch des Holzschraubengewindes nach DIN 7998). Vorteilhaft für den Benutzer der Anschlussvorrichtung 10 oder 10' nach der Erfindung ist, dass einfach und schnell sehr große Kräfte aus der Holzkonstruktion 28 über die Gewindestange 12 und die Anschlussvorrichtung 10 oder 10' auf ein Stahlteil übertragen werden können. Statt des Holzschraubengewindes nach DIN 7998 kann auch ein Spezialgewinde verwendet werden. Ein besonderer Vorteil der Anschlussvorrichtung 10, 10' nach der Erfindung ist, dass diese die im eingangs geschilderten Stand der Technik eingesetzte Eindrehhülse ersetzen kann, so dass das Anschrauben des Adapters 20, 20' ohne zusätzliche Arbeitsschritte möglich ist. Darüber hinaus können dabei über den Zapfen 30 der Anschlussvorrichtung 10 oder über die Gewindebohrung 40 der Anschlussvorrichtung 10' vorgebohrte Stahlteile bzw. mit einem Zapfen mit Maschinenschraubengewinde versehene Stahlteile an der zuvor in die Holzkonstruktion 28 eingedrehten Gewindestange 12 befestigt werden. Dabei ist der Adapter 20, 20' leicht an Antriebsmaschinen anpassbar, die lediglich einen entsprechend ausgebildeten Bit aufzuweisen brauchen, der mit dem Außengewinde 34 des Zapfens 30 oder mit dem Innengewinde 42 der Bohrung 40 kuppelbar ist.

Nach den Fig. 1 bis 3 hat der Adapter 20 ein Sackloch zum Einschrauben der Gewindestange 12 mit Holzschraubengewinde. Der Grund des Sackloches dient hier mit dem Anschlagelement 46 als Anschlag für die Gewindestange 12. In der Ausgestaltung des Adapters 20' nach Fig. 4 kann die Öffnung 44 ein sich von der Bohrung 40 aus zu der Bohrung 24 hin erstreckendes Sackloch sein oder, wie oben bereits erwähnt und in Fig. 4 dargestellt, ein Durchgangsloch. Wenn das Durchgangsloch, wie dargestellt, einen Innendrehkraftangriff bildet, in den ein Werkzeug mit einem entsprechenden polygonalen Querschnitt durch die Gewindebohrung 40 hindurch eingeführt werden kann, so ist ersichtlich, dass das Durchgangsloch in der lichten Weite enger ist als die Gewindebohrung 24, so dass auch in diesem Fall für die Gewindestange 12 ein Anschlag in dem Adapter 20' vorhanden ist.

### Bezugszeichenliste

- 10, 10': Anschlussvorrichtung
- 12: Gewindestange
- 14: Öse
- 15: Mutter
- 16: Stahlplatte
- 18: Holzschraubengewinde
- 20, 20': Adapter
- 21: Mittelachse
- 22: Ende
- 24: Gewindebohrung
- 26: Holzschraubengewinde
- 28: Holzkonstruktion
- 30: Zapfen
- 32: Ende
- 34: Maschinenschraubengewinde
- 36: Außendrehkraftangriff
- 40: Bohrung
- 42: Maschinenschraubengewinde
- 44: Öffnung
- 46: Anschlagelement

## Patentansprüche

1. Vorrichtung zum Anschluss einer Gewindestange mit Holzschraubengewinde an Stahlteile wie Ösen od. dgl.,
**gekennzeichnet durch** einen bolzenförmigen Adapter (20, 20') mit an einem Ende (22) angeordneter Gewindebohrung (24) mit Holzschraubengewinde (26) zum Einschrauben der Gewindestange (12), wobei die Gewindebohrung (24) als ein Sackloch ausgebildet ist oder am Ende in ein engeres Durchgangsloch übergeht, und mit einem an dem anderen Ende (32) ausgebildeten Maschinenschraubengewinde (34, 42) zum Anschluss von Stahlteilen (14, 16).

2. Vorrichtung nach Anspruch 1, **dadurch gekennzeichnet, dass** der Adapter (20) an dem anderen Ende (32) einen Zapfen (30) aufweist, der außen mit dem Maschinenschraubengewinde (34) versehen ist.

3. Vorrichtung nach Anspruch 1, **dadurch gekennzeichnet, dass** der Adapter (20') an dem anderen Ende (32) eine weitere Gewindebohrung (40) aufweist, die mit dem Maschinenschraubengewinde (42) versehen ist und in die das engere Durchgangsloch, falls vorhanden, mündet.

4. Vorrichtung nach einem der vorhergehenden Ansprüche, **dadurch gekennzeichnet, dass** das Maschinenschraubengewinde (34, 42) ein Metrisches ISO-Gewinde oder ein UST-Gewinde ist.

5. Vorrichtung nach einem der vorhergehenden Ansprüche, **dadurch gekennzeichnet, dass** der Adapter (20) an oder benachbart zu seinem anderen Ende (32) mit einem Außendrehkraftangriff (36) versehen ist.

6. Vorrichtung nach Anspruch 3, **gekennzeichnet durch** eine sich in der Mittelachse (21) des Adapters (20') zwischen der weiteren Gewindebohrung (40) und der einen Gewindebohrung (24) erstreckende Öffnung (44) mit polygonalem Querschnitt.
